# FASCICULE DE BREVET EUROPEEN

(11) **EP 2 463 697 B1**
(45) Date de publication et mention de la délivrance du brevet: **08.01.2014**
(21) Numéro de dépôt: 11190443.9
(22) Date de dépôt: 24.11.2011
(51) Int. Cl.: G02B 6/44

(54) **Cassette de lovage de fibres et de maintien d'epissures**
Kassette zum Aufwickeln von Fasern und Aufrechterhalten der Spleißungen
Cassette for coiling fibres and maintaining splices

(30) Priorité: 07.12.2010 FR 1060162
(43) Date de publication de la demande: 13.06.2012
(73) Titulaire: Nexans, 75008 Paris (FR)
(72) Inventeur: Milanowski, Michel, 60540 Anserville (FR); Monatlik, Jean-Christophe, 92150 Suresnes (FR)
(74) Mandataire: Gauer, Pierre

(56) Documents cités:
- EP-A1- 0 202 994
- EP-A1- 0 823 650
- FR-A1- 2 919 075
- US-A1- 2005 123 261

## Description

La présente invention a pour objet une cassette de lovage de fibres et de maintien d'épissures. Elle concerne également un boîtier muni d'une telle cassette, et notamment un boîtier permettant de raccorder des fibres optiques d'un utilisateur à des fibres optiques issues d'un câble d'acheminement de fibres optiques.

Les cassettes sont des boîtes de lovage et de protection de fibres optiques et souvent également de protection de raccords entre les fibres optiques lovées. De telles cassettes sont utilisées pour le raccordement d'un câble optique ou de différents câbles optiques à des jarretières optiques ou à d'autres câbles. Chaque cassette est affectée à deux fibres optiques à raccorder l'une à l'autre ou à plusieurs fibres à raccorder individuellement à plusieurs autres fibres.

Les cassettes sont disposées dans un boîtier de raccordement destiné à raccorder un câble principal à un ou plusieurs câbles d'utilisateurs.

Un réseau FTTH est un réseau de télécommunications dont la partie terminale arrivant chez l'utilisateur est constitués de fibres optique. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise).

Le développement récent des programmes FTTH implique que la colonne montante des immeubles, en particulier dans les zones d'habitation denses, soit équipée d'au moins quatre fibres optiques par utilisateur. Une conséquence est la croissance importante du nombre de fibres optiques à traiter par utilisateur et par étage.

Cette croissance du nombre de fibres optiques entraîne l'utilisation de boîtiers quatre fois plus volumineux.

Les documents US 2005/123261 et EP 0 823 650 décrivent des cassettes qui comprennent des zones de maintien d'épissures superposées dans l'épaisseur de la cassette. Ces cassettes sont peu compactes.

La présente invention vise à remédier à cet inconvénient.

Elle propose en particulier une cassette de lovage de fibres et de maintien d'épissures plus compacte qui permet de traiter davantage de fibres optiques.

L'invention a ainsi pour objet une cassette de lovage de fibres et de maintien d'épissures, comprenant deux faces, chaque face étant munie d'une zone de lovage de fibres et d'une zone de maintien d'épissures.

Conformément à l'invention, les zones de maintien d'épissures sont distinctes et non superposées dans l'épaisseur de la cassette.

On peut ainsi disposer chaque zone de maintien d'épissures à l'intérieur de la cassette, ce qui permet de gagner de la place en épaisseur.

Chaque zone de maintien d'épissures est entièrement comprise dans l'épaisseur de la cassette. Autrement dit, chaque zone de maintien d'épissures peut être disposée dans l'espace compris entre le plan de la bordure inférieure et le plan de la bordure supérieure de la cassette. Les deux zones de maintien d'épissures sont ainsi situées dans une même épaisseur, ce qui permet de gérer deux fois plus d'épissures dans la même épaisseur.

Chaque zone de lovage de fibres peut être une zone centrale de la cassette, et les zones de maintien d'épissures peuvent être disposées de chaque côté de la zone de lovage.

Les zones de lovage peuvent être superposées dans l'épaisseur de la cassette.

Chaque zone de lovage peut comprendre des moyens de lovage de fibres et des moyens de rétention de fibres.

Les moyens de lovage de fibres peuvent être munis de moyens de rétention de fibres.

Les moyens de lovage de fibres peuvent comprendre deux tambours de périphérie courbe.

La cassette peut comprendre une première face munie d'une zone centrale de lovage de fibres et d'une zone de maintien d'épissures située dans la partie inférieure de la cassette ainsi qu'une deuxième face munie d'une zone centrale de lovage de fibres et d'une zone de maintien d'épissures située dans la partie supérieure de la cassette.

Les moyens de rétention d'épissures peuvent comprendre des parois de maintien de fibres reposant sur un support, le support pouvant être orthogonal aux parois de maintien.

Chaque support peut s'étendre au niveau de la bordure de la face opposée.

L'invention a également pour objet un boîtier de raccordement de fibres optiques, et notamment un boîtier de raccordement de fibres optiques d'un câble principal à des fibres optiques d'un utilisateur, comprenant au moins une cassette décrite ci-dessus.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 illustre la face arrière d'une cassette selon l'invention, et
- la figure 2 illustre la face avant de la cassette.

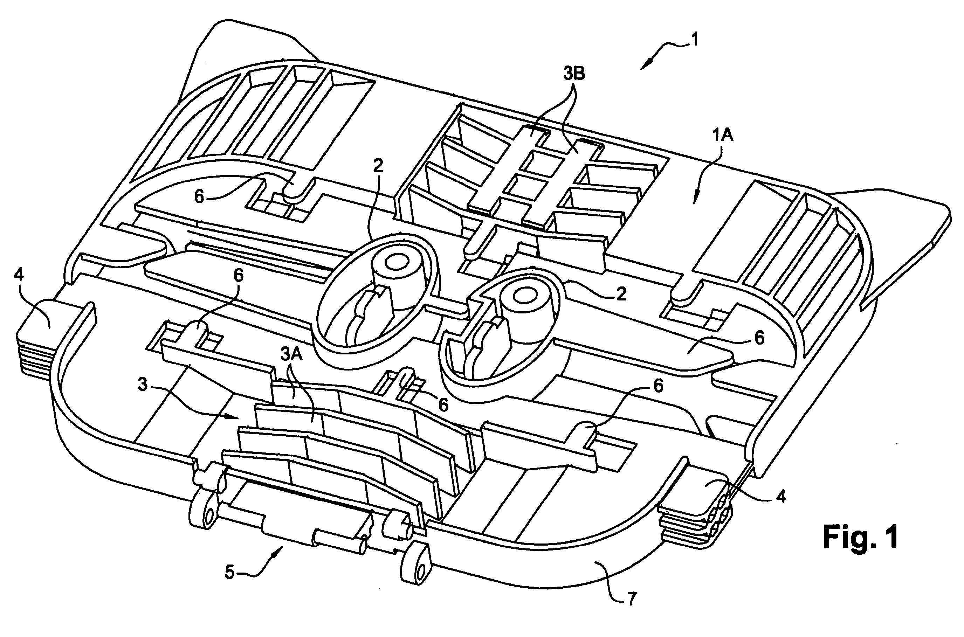

La cassette 1, telle qu'illustrée en vue en perspective de dessous à la figure 1, comprend des moyens de lovage 2 des fibres disposés dans une zone centrale de lovage de fibres, ainsi que des moyens de maintien 3 d'épissures entre fibres disposés dans une zone inférieure de maintien d'épissures, en dessous de la zone centrale de lovage de fibres.

La cassette 1 comprend en outre un ou plusieurs peignes 4 pour maintenir les fibres optiques à l'entrée et à la sortie de la cassette 1, ainsi qu'une charnière 5 qui permet soit d'articuler la cassette 1 sur son châssis soit de fixer la cassette 1 sur une autre cassette en réalisant l'articulation de cette dernière.

Les moyens de lovage 2 permettent d'avoir une longueur suffisante de fibres pour les amener à une soudure. Ils permettent d'effectuer plusieurs interventions sur les fibres pour les réparer.

Les moyens de lovage 2 peuvent par exemple comprendre deux tambours 2 à partie périphérique courbe ou partiellement courbe qui permettent de lover les fibres dans les espaces libres de la zone de lovage. L'utilisation de tambours garantit un rayon minimum à la fibre et l'utilisation des deux tambours 2 permet un guidage en forme de S des fibres de manière à ce que les fibres entrent et sortent du même côté de la cassette 1.

La cassette 1 comprend des moyens de rétention 6 des fibres lovées, par exemple sous la forme de pattes plates 6, disposés dans la zone centrale de lovage de fibres. Les moyens de rétention 6 peuvent en particulier être disposés sur les moyens de lovage 2.

Les moyens de maintien 3 d'épissures comprennent des parois de maintien 3A verticales de fibres. Les parois de maintien 3A sont orthogonales au plan de la cassette 1 et reposent sur un support 3B horizontal de maintien d'épissures parallèle au plan de la cassette 1. Le support 3B représenté à la figure 1 est le support des parois de maintien de la face avant de la cassette 1.

Ainsi, la face arrière illustrée à la figure 1 comprend une zone centrale de lovage de fibres et une zone inférieure de maintien d'épissures située dans une cavité disposée dans l'épaisseur de la cassette 1, en dessous de la zone centrale de lovage de fibres, la zone supérieure de maintien d'épissures étant la zone de maintien d'épissures de la face avant.

Chaque zone de maintien d'épissures n'est accessible à un opérateur que sur une face de la cassette 1.

La cassette 1 comprend une bordure inférieure 1A et une bordure supérieure 1B. La bordure inférieure 1A et la bordure supérieure 1B sont horizontales, sensiblement planes, et délimitent l'épaisseur de la cassette 1. La cassette 1 comprend également une bordure latérale verticale 7.

Tout comme les moyens de lovage 2, les moyens de maintien 3 d'épissures sont disposés dans l'épaisseur de la cassette 1, entre la surface inférieure 1A et la surface supérieure 1B de la cassette 1.

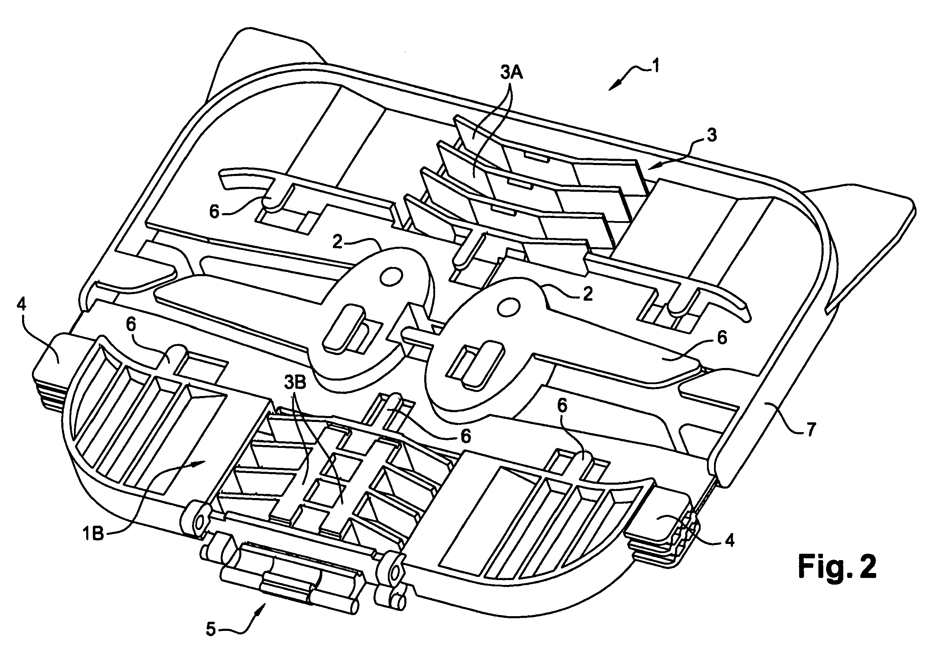

Inversement, et tel qu'illustré à la figure 2 sur laquelle les éléments identiques à ceux de la figure 1 portent les mêmes références, la face avant comprend une zone centrale de lovage de fibres et une zone supérieure de maintien d'épissures située dans une cavité disposée dans l'épaisseur de la cassette 1, au-dessus de la zone centrale de lovage de fibres, la zone inférieure de maintien d'épissures étant la zone de maintien d'épissures de la face arrière.

Les deux zones de lovage de la face avant et de la face arrière sont superposées, ce qui permet un gain de place dans l'épaisseur du maintien des épissures qui définit l'épaisseur de la cassette 1. Le support horizontal 3B de maintien d'épissures de la face arrière s'étend au niveau de la surface supérieure 1B de la face avant et le support horizontal 3B de maintien d'épissures de la face avant s'étend au niveau de la surface supérieure 1A de la face arrière.

La cassette selon l'invention permet ainsi un gain notable d'épaisseur comparativement à l'emploi de deux cassettes comprenant chacune une zone de maintien d'épissures.

## Revendications

1. Cassette (1) de lovage de fibres et de maintien d'épissures, comprenant une bordure inférieure (1A) et une bordure supérieure (1B) sensiblement planes et délimitant l'épaisseur de la cassette, ladite cassette (1) comprenant deux faces, chaque face étant munie d'une zone de lovage de fibres et d'une zone de maintien d'épissures, **caractérisée en ce que** les zones de maintien d'épissures sont distinctes et non superposées dans l'épaisseur de la cassette (1), et **en ce que** chaque zone de maintien d'épissures est entièrement disposée dans l'espace compris entre le plan de la bordure inférieure (1A) et le plan de la bordure supérieure (1B) de la cassette (1), de sorte que les deux zones de maintien d'épissures sont situées dans une même épaisseur.

2. Cassette (1) selon la revendication 1, **caractérisée en ce que** chaque zone de lovage de fibres est une zone centrale de la cassette (1), et **en ce que** les zones de maintien d'épissures sont disposées de chaque côté de la zone de lovage.

3. Cassette (1) selon la revendication 1 ou 2, **caractérisée en ce que** les zones de lovage sont superposées dans l'épaisseur de la cassette (1).

4. Cassette (1) selon l'une des revendications 1 à 3, **caractérisée en ce que** chaque zone de lovage comprend des moyens de lovage (2) de fibres et des moyens de rétention (6) de fibres.

5. Cassette (1) selon l'une des revendications 1 à 4, **caractérisée en ce que** les moyens de lovage (2) de fibres sont munis de moyens de rétention (6) de fibres.

6. Cassette (1) selon l'une des revendications 1 à 5, **caractérisée en ce que** les moyens de lovage (2) de fibres comprennent deux tambours (2) de périphérie courbe.

7. Cassette (1) selon l'une des revendications 1 à 6, **caractérisé en ce qu'**elle comprend une première face munie d'une zone centrale de lovage de fibres et d'une zone de maintien d'épissures située dans la partie inférieure de la cassette (1) ainsi qu'une deuxième face munie d'une zone centrale de lovage de fibres et d'une zone de maintien d'épissures située dans la partie supérieure de la cassette (1).

8. Cassette (1) selon l'une des revendications 1 à 7, **caractérisée en ce que** les moyens de rétention (3) d'épissures comprennent des parois de maintien (3A) de fibres reposant sur un support (3B).

9. Cassette (1) selon la revendication 8, **caractérisée en ce que** chaque support (3B) s'étend au niveau de la bordure (1A,1B) de la face opposée.

10. Boîtier de raccordement de fibres optiques, **caractérisé en ce qu'**il comprend au moins une cassette (1) selon l'une des revendications 1 à 9.

## Patentansprüche

1. Kassette (1) zum Aufwickeln von Fasern und Aufrechterhalten der Spleißungen, die einen unteren Rand (1 A) und einen oberen Rand (1 B) umfasst, die etwa eben sind und die Dicke der Kassette begrenzen, wobei die Kassette (1) zwei Flächen umfasst, wobei jede Fläche mit einer Aufwickelzone der Fasern und einer Zone zum Aufrechterhalten der Spleißungen ausgestattet ist, **dadurch gekennzeichnet, dass** die Zonen zum Aufrechterhalten der Spleißungen unterschiedlich und nicht in der Dicke der Kassette (1) übereinandergelagert sind und dass jede Zone zum Aufrechterhalten der Spleißungen vollkommen in dem Raum zwischen der Ebene des unteren Rands (1A) und der Ebene des oberen Rands (1B) der Kassette (1) derart angeordnet ist, dass sich die zwei Zonen zum Aufrechterhalten der Spleißungen in einer selben Dicke befinden.

2. Kassette (1) nach Anspruch 1, **dadurch gekennzeichnet, dass** jede Aufwickelzone der Fasern eine zentrale Zone der Kassette (1) ist und dass die Zonen zum Aufrechterhalten der Spleißungen auf jeder Seite der Aufwickelzone angeordnet sind.

3. Kassette (1) nach Anspruch 1 oder 2, **dadurch gekennzeichnet, dass** die Aufwickelzonen in der Dicke der Kassette (1) übereinandergelagert sind.

4. Kassette (1) nach einem der Ansprüche 1 bis 3, **dadurch gekennzeichnet, dass** jede Aufwickelzone Aufwickelmittel (2) der Fasern und Rückhaltemittel (6) der Fasern umfasst.

5. Kassette (1) nach einem der Ansprüche 1 bis 4, **dadurch gekennzeichnet, dass** die Aufwickelmittel (2) der Fasern mit Rückhaltemitteln (6) der Fasern ausgestattet sind.

6. Kassette (1) nach einem der Ansprüche 1 bis 5, **dadurch gekennzeichnet, dass** die Aufwickelmittel (2) der Fasern zwei Trommeln (2) mit gekrümmtem Umfang umfassen.

7. Kassette (1) nach einem der Ansprüche 1 bis 6, **dadurch gekennzeichnet, dass** sie eine erste Fläche umfasst, die mit einer zentralen Zone zum Aufwickeln der Fasern ausgestattet ist und einer Zone zum Aufrechterhalten der Spleißungen, die sich im unteren Teil der Kassette (1) befindet sowie eine zweite Fläche, die mit einer zentralen Zone zum Aufwickeln der Fasern und einer Zone zum Aufrechterhalten der Spleißungen ausgestattet ist, die sich im oberen Teil der Kassette (1) befindet.

8. Kassette (1) nach einem der Ansprüche 1 bis 7, **dadurch gekennzeichnet, dass** die Rückhaltemittel (3) der Spleißungen Wände zum Rückhalten (3A) der Fasern umfassen, die auf einer Unterlage (3B) ruhen.

9. Kassette (1) nach Anspruch 8, **dadurch gekennzeichnet, dass** sich jede Unterlage (3B) auf Ebene des Rands (1A, 1 B) der gegenüberliegenden Fläche erstreckt.

10. Anschlusskasten von optischen Fasern, **dadurch gekennzeichnet, dass** er mindestens eine Kassette (1) nach einem der Ansprüche 1 bis 9 umfasst.

## Claims

1. A cassette (1) for coiling fibers and maintaining splices, comprising a lower border (1A) and an upper border (1B), which are substantially planar and delimit the thickness of the cassette, said cassette (1) comprising two faces, each face being provided with a fiber coiling zone and a splice maintaining zone, **characterized in that** the splice maintaining zones are separate from and not superimposed in the thickness of the cassette (1), and **in that** each splice maintaining zone is completely positioned in the space comprised between the plane of the lower border (1A) and the plane of the upper border (1 B) of the cassette (1), such that the two splice maintaining zones are situated in a same thickness.

2. The cassette (1) according to claim 1, **characterized in that** each fiber coiling zone is a central zone of the cassette (1), and **in that** the splice maintaining zones are positioned on either side of the coiling zone.

3. The cassette (1) according to claim 1 or 2, **characterized in that** the coiling zones are superimposed in the thickness of the cassette (1).

4. The cassette (1) according to one of claims 1 to 3, **characterized in that** each coiling zone comprises fiber coiling means (2) and fiber retaining means (6).

5. The cassette (1) according to one of claims 1 to 4, **characterized in that** the fiber coiling means (2) are provided with fiber retaining means (6).

6. The cassette (1) according to one of claims 1 to 5, **characterized in that** the fiber coiling means (2) comprise two curved peripheral drums (2).

7. The cassette (1) according to one of claims 1 to 6, **characterized in that** it comprises a first face provided with a central fiber coiling zone and a splice maintaining zone situated in the lower part of the cassette (1) as well as a second face provided with a central fiber coiling zone and a splice maintaining zone situated in the upper part of the cassette (1).

8. The cassette (1) according to one of claims 1 to 7, **characterized in that** the splice maintaining means (3) comprise fiber maintaining walls (3A) resting on a support (3B).

9. The cassette (1) according to claim 8, **characterized in that** each support (3B) extends at the border (1 A, 1 B) of the opposite face.

10. An optical fiber connecting housing, **characterized in that** it comprises at least one cassette (1) according of one of claims 1 to 9.
